(19) Europäisches Patentamt
European Patent Office
Office européen des brevets

(11) EP 1 202 627 B1

(12) EUROPÄISCHE PATENTSCHRIFT

(45) Veröffentlichungstag und Bekanntmachung des Hinweises auf die Patenterteilung:
**18.06.2003 Patentblatt 2003/25**

(21) Anmeldenummer: **00945897.7**

(22) Anmeldetag: **07.07.2000**

(51) Int Cl.[7]: **A01N 43/42**
// (A01N43/42, 47:14, 47:12, 47:04, 43:90, 43:88, 43:653, 37:24)

(86) Internationale Anmeldenummer:
**PCT/EP00/06470**

(87) Internationale Veröffentlichungsnummer:
**WO 01/005228 (25.01.2001 Gazette 2001/04)**

(54) **FUNGIZIDE WIRKSTOFFKOMBINATIONEN**
FUNGICIDAL COMBINATIONS OF ACTIVE SUBSTANCES
COMBINAISONS DE SUBSTANCES ACTIVES FONGICIDES

(84) Benannte Vertragsstaaten:
**AT BE CH CY DE DK ES FI FR GB GR IE IT LI LU MC NL PT SE**

(30) Priorität: **20.07.1999 DE 19933938**

(43) Veröffentlichungstag der Anmeldung:
**08.05.2002 Patentblatt 2002/19**

(60) Teilanmeldung:
**02014967.0 / 1 247 452**

(73) Patentinhaber: **Bayer CropScience AG**
**40789 Monheim (DE)**

(72) Erfinder:
- **DUTZMANN, Stefan**
  **D-40764 Langenfeld (DE)**
- **STENZEL, Klaus**
  **D-40595 Düsseldorf (DE)**
- **MAULER-MACHNIK, Astrid**
  **D-42799 Leichlingen (DE)**
- **WACHENDORFF-NEUMANN, Ulrike**
  **D-56566 Neuwied (DE)**

(56) Entgegenhaltungen:
**EP-A- 0 106 105** **EP-A- 0 106 106**
**EP-A- 0 910 948** **WO-A-98/54146**
**DE-A- 4 139 637** **US-A- 5 240 940**

- **D W HOLLOMON ET AL: "Defining the resistance risk of the new powdery mildew fungicide Quinoxyfen" PESTICIDE SCIENCE,GB,ELSEVIER APPLIED SCIENCE PUBLISHER. BARKING, Bd. 51, 1997, Seiten 347-351, XP002096857 ISSN: 0031-613X**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 202 627 B1

Printed by Jouve, 75001 PARIS (FR)

## Beschreibung

Die vorliegende Erfindung betrifft neue Wirkstoffkombinationen, die aus dem bekannten 5,7-Dichlor-4-(4-fluorphenoxy)-chinolin einerseits und weiteren bekannten fungiziden Wirkstoffen andererseits bestehen und sehr gut zur Bekämpfung von phytopathogenen Pilzen geeignet sind.

Es ist bereits bekannt, daß 5,7-Dichlor-4-(4-fluor-phenoxy)-chinolin fungizide Eigenschaften besitzt (vgl. EP - A 0 326 330 und US - A 5 240 940 ). Die Wirksamkeit dieses Stoffes ist gut, läßt aber bei niedrigen Aulwandmengen in manchen Fällen zu wünschen übrig.

Ferner ist schon bekannt, daß bestimmte Kombinationen von 5,7-Dichlor-4-(4-fluorphenoxy)-chinolin mit anderen bekannten fungiziden. Wirkstoffen zur Bekämpfung von Pilzen eingesetzt werden können (vgl. EP-A 0 326 330, WO 96/18 299, WO 98 / 51146 und US - A 5 240 940). Auch die Wirkung dieser Mischungen ist aber nicht immer befriedigend.

Aus der EP - A 0 106 105 und der EP - A 0 106 106 sind Mischungen von Triadimenol bzw. Bitertanol mit bestimmten anderen fungiziden Wirkstoffen bekannt. Kombinationen, die Quinoxyfen enthalten, werden jedoch nicht beschrieben.

Gemäß EP - A 0 910 948 lassen sich Kombinationen aus Quinoxyfen und Epoxiconazol zur Bekämpfung von Pilzen verwenden. Der Einsatz von Mischungen, in denen Triadimenol oder Bitertanol vorhanden ist, wird aber nicht erwähnt.

Die DE - A 41 39 637 betrifft synergistisch wirksame Fungizid - Kombinationen. Quinoxyfen wird jedoch nicht als Mischpartner aufgezählt.

Schließlich geht aus Pestic. Sci. 51, 347 - 351 ( 1997 ) hervor, daß Triadimenol und Quinoxyfen bei der Bekämpfung von Mehltau an Gerste keine Cross - Resistenz zeigen, wenn die Wirkstoffe getrennt voneinander in separaten Tests angewandt werden. Ein Hinweis auf Gemische aus Quinoxyfen und Triadimenol ist nicht vorhanden.

Es wurde nun gefunden, daß Mittel mit einem Gehalt an einer Wirkstoffkombination, bestehend aus 5,7-Dichlor-4-(4-fluor-phenoxy)-chinolin der Formel

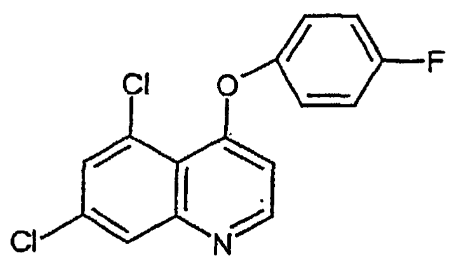

(I)

und

(1) einem Triazol-Derivat der Formel

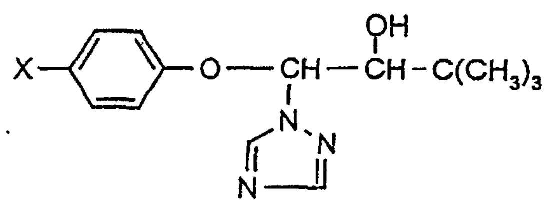

(II),

in welcher

X für Chlor oder Phenyl steht,

neben Streckmitteln und / oder oberflächenaktiven Stoffen, wobei in den Wirkstoffkombinationen das Gewichtsverhältnis von Wirkstoff der Formel ( I ) zu Wirkstoff der Gruppe ( 1 ) zwischen 1 : 0,1 und 1 : 10 liegt, sehr gut zur Bekämpfung phytopathogener Pilze geeignet sind.

Überraschenderweise ist die fungizide Wirkung der erfindungsgemäßen Wirkstoffkombinationen wesentlich

höher als die Summe der Wirkungen der einzelnen Wirkstoffe. Es liegt also ein nicht vorhersehbarer, echter synergistischer Effekt vor und nicht nur eine Wirkungsergänzung.

Das 5,7-Dichlor-4-(4-fluor-phenoxy)-chinolin der Formel (I) ist bekannt (vgl. EP-A 0 326 330).

Die Formel (II) umfaßt die Verbindungen
1-(4-Chlor-phenoxy)-3,3-dimethyl-1-(1,2,4-triazol-1-yl)-butan-2-ol der Formel

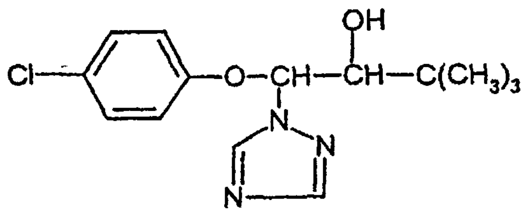

(IIa)

(Triadimenol)

und
1-(4-Phenyl-phenoxy)-3,3-dimethyl-1-(1,2,4-tziazol-1-yl)-butan-2-ol der Formel

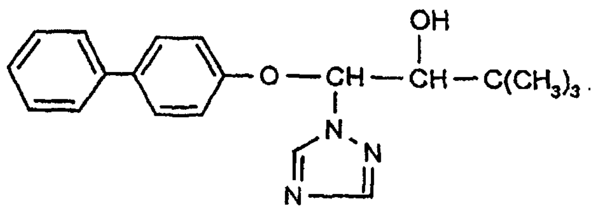

(IIb)

(Bitertanol)

Die in den erfindungsgemäßen Wirkstoffkombinationen neben dem 5,7-Dichlor-4-(4-fluor-phenoxy)-chinolin der Formel (I) außerdem vorhandenen fungiziden Komponenten sind ebenfalls bekannt. Im einzelnen werden die Wirkstoffe in der folgenden Publikation beschrieben:

(1) Verbindungen der Formel (II)
DE-A 2 324 010

Die erfindungsgemäßen Wirkstoffkombinationen enthalten neben dem Wirkstoff der Formel (I) einen Wirkstoff von den Verbindungen der Gruppe (1).

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden.

Bevorzugt entfallen auf 1 Gewichtsteil an Wirkstoff der Formel (I) 0,5 bis 5 Gewichtsteile an Wirkstoff aus der Gruppe (1).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Puccinia und Septoria, sowie zur Bekämpfung von Krankheiten im Weinbau, wie Uncinula, Plasmopara und Botrytis, und außerdem in dikotylen Kulturen zur Bekämpfung von Echten und Falschen Mehltaupilzen sowie Blattfleckenerregern.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel

eingesetzt werden.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby (Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,

Y den Wirkungsgrad beim Einsatz des Wirkstoffes B in einer Aufwandmenge von n g/ha bedeutet und

E den Wirkungsgrad beim Einsatz der Wirkstoffe A und B in Aufwandmengen von m und n g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, daß kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht

## Beispiele

### Beispiel 1

**Sphaerotheca-Test (Gurke) / protektiv**

Lösungsmittel: 47 Gewichtsteile Aceton
Emulgator: 3 Gewichtsteile Alkyl-Aryl-Polyglykolether

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration, oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von **Sphaerotheca fuliginea** inokuliert. Die Pflanzen werden dann bei ca. 23°C und einer relativen Luftfeuchtigkeit von ca. 70 % im Gewächshaus aufgestellt.

10 Tage nach der Inokulation erfolgt die Auswertung. Dabei bedeutet 0% ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 1**

Sphaerotheca-Test (Gurke) / protektiv

| Wirkstoff | Aufwandmenge an Wirkstoff in g/ha | Wirkungsgrad in % |
|---|---|---|
| Bekannt:<br>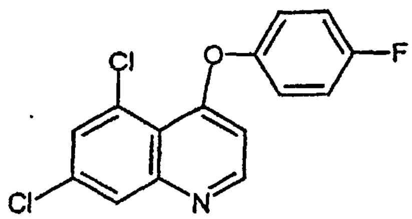<br>(I) | 10<br>5 | 63<br>57 |
| 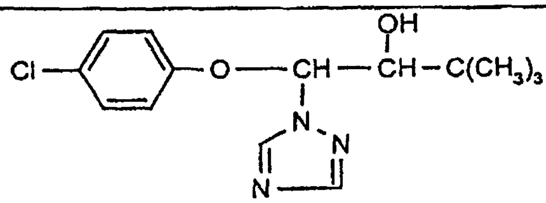<br>(IIa) | 5 | 63 |
| 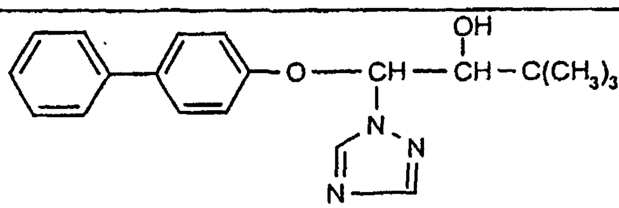<br>(IIb) | 10 | 27 |

Tabelle 1 (Fortsetzung)

| Sphaerotheca-Test (Gurke) / protektiv | | | |
|---|---|---|---|
| Wirkstoff | Aufwandmenge an Wirkstoff in g/ha | Wirkungsgrad in % | |
| Erfindungsgemäß: | | gef. | ber.*) |
| (I) + (IIa) 1:1 | 5 + 5 | 92 | 84 |
| (I) + (IIb) 1:1 | 10 + 10 | 95 | 73 |

*) gef. = gefundener Wirkungsgrad
ber. = nach der Colby-Formel berechneter Wirkungsgrad

**Beispiel 2**

Erysiphe-Test (Gerste) / kurativ

Lösungsmittel: 10 Gewichtsteile N-Methyl-pyrrolidon
Emulgator: 0,6 Gewichtsteile Alkylarylpolyglykolether

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der Wirkstoffzubereitung in der angegebenen Aufwandmenge besprüht.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aufwandmengen und Versuchsergebnisse gehen aus der folgenden Tabelle hervor.

**Tabelle 2**

| Erysiphe-Test (Gerste) / kurativ | | |
|---|---|---|
| Wirkstoff | Aufwandmenge an Wirkstoff in g/ha | Wirkungsgrad in % |
| Bekannt:<br>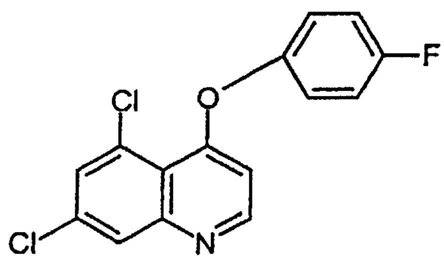<br>(I) | 25<br>6,25 | 57<br>43 |
| 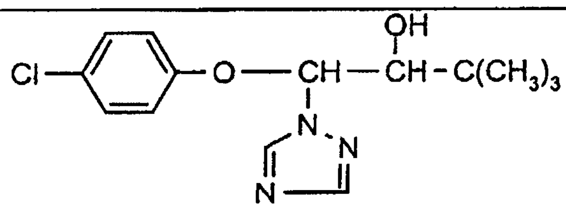<br>(IIa) | 25 | 93 |
| Erfindungsgemäß:<br>(I) + (IIa)<br>1:1 | 12,5 + 12,5 | 100 |
| (I) + (IIa)<br>1:3 | 6,25 + 18,75 | 100 |

**Patentansprüche**

1. Mittel zur Bekämpfung phytopathogener Pilze, **gekennzeichnet durch** einen Gehalt an einer Wirkstoffkombination, bestehend aus
   5,7-Dichlor-4-(4-fluor-phenoxy)-chinolin der Formel

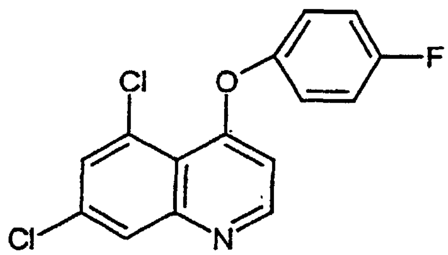

(I)

und

(1) einem Triazol-Derivat der Formel

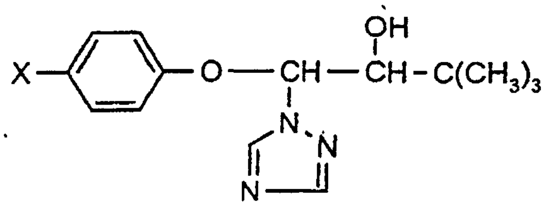

(II),

in welcher

X für Chlor oder Phenyl steht,

neben Streckmitteln und / oder oberflächenaktiven Stoffen, wobei in den Wirkstoffkombinationen das Gewichtsverhältnis von Wirkstoff der Formel ( I ) zu Wirkstoff der Gruppe ( 1 ) zwischen 1 : 0,1 und 1 : 10 liegt.

2. Verfahren zur Bekämpfung von phytopathogenen Pilzen, **dadurch gekennzeichnet, daß** man Wirkstoffkombinationen gemäß Anspruch 1 auf die Pilze und / oder deren Lebensraum ausbringt.

3. Verwendung von Wirkstoffkombinationen gemäß Anspruch 1 zur Bekämpfung von phytopathogenen Pilzen.

4. Verfahren zur Herstellung von Mitteln zur Bekämpfung von phytopathogenen Pilzen, **dadurch gekennzeichnet, daß** man Wirkstoffkombinationen gemäß Anspruch 1 mit Streckmitteln und / oder oberflächenaktiven Stoffen vermischt.

**Claims**

1. Compositions for controlling phytopathogenic fungi, **characterized in that** they comprise an active compound combination consisting of
   5,7-dichloro-4-(4-fluoro-phenoxy)-quinoline of the formula

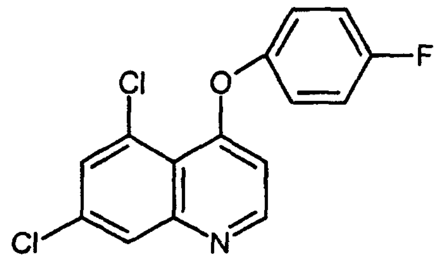

(I)

and

(1)a triazole derivative of the formula

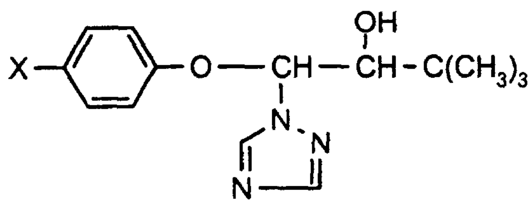

(II),

in which

X represents chlorine or phenyl,

in addition to extenders and/or surfactants, wherein in the active compound combinations the weight ratio of active compound of the formula (I) to active compound of group (1) is between 1:0.1 and 1:10.

2. Method for controlling phytopathogenic fungi, **characterized in that** active compound combinations according to Claim 1 are applied to the fungi and/or their habitats.

3. Use of active compound combinations as claimed in Claim 1 for controlling phytopathogenic fungi.

4. Process for preparing compositions for controlling phytopathogenic fungi, **characterized in that** active compound combinations according to Claim 1 are mixed with extenders and/or surfactants.

## Revendications

1. Composition destinée à combattre des champignons phytopathogènes, **caractérisée par** une teneur en une association de substances actives constituée
de 5,7-dichloro-4-(4-fluoro-phénoxy)-chinoléine de formule

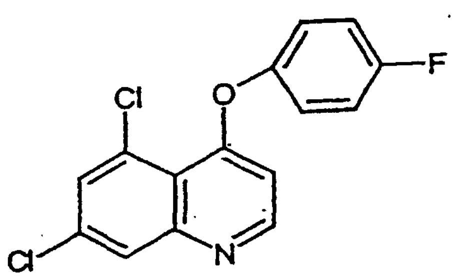

(I)

et

(1) d'un dérivé de triazol de formule

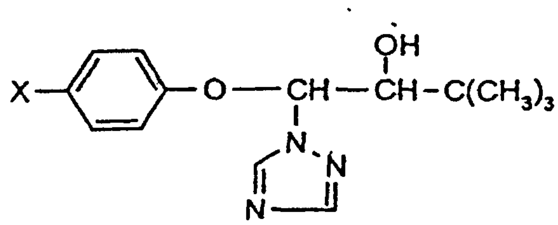

(II),

dans laquelle
X représente le chlore ou un reste phényle,

à côté de diluants et/ou de substances tensio-actives, le rapport en poids de la substance active de formule (I) à la substance active du groupe (1) dans les associations de substances actives étant compris entre 1:0,1 et 1:10.

2. Procédé de lutte contre des champignons phytopathogènes, **caractérisé en ce qu'**on mélange des associations de substances actives suivant la revendication 1 sur les champignons et/ou sur leur milieu.

3. Utilisation d'associations de substances actives suivant la revendication 1 pour combattre des champignons phytopathogènes.

4. Procédé de préparation de compositions destinées à combattre des champignons phytopathogènes, **caractérisé en ce qu'**on mélange des associations de substances actives suivant la revendication 1 avec des diluants et/ou des agents tensio-actifs.